# EUROPÄISCHE PATENTSCHRIFT

(11) **EP 1 062 413 B1**
(45) Veröffentlichungstag und Bekanntmachung des Hinweises auf die Patenterteilung: **02.10.2002**
(21) Anmeldenummer: 99913146.9
(22) Anmeldetag: 06.02.1999
(51) Int. Cl.: F02B 17/00, F02D 13/02

(54) **VERFAHREN ZUM BETRIEB EINES OTTOMOTORS MIT DIREKTEINSPRITZUNG**
METHOD FOR OPERATING A SPARK-IGNITION ENGINE WITH DIRECT INJECTION
PROCEDE DE FONCTIONNEMENT D'UN MOTEUR A ALLUMAGE PAR ETINCELLE A INJECTION DIRECTE

(30) Priorität: 11.03.1998 DE 19810466
(43) Veröffentlichungstag der Anmeldung: 27.12.2000
(73) Patentinhaber: DaimlerChrysler AG, 70567 Stuttgart (DE)
(72) Erfinder: HERTZBERG, Andreas, D-70374 Stuttgart (DE); RÖSSLER, Klaus, D-73776 Altbach (DE); VENT, Guido, D-67346 Speyer (DE)
(86) Internationale Anmeldenummer: EP9900794
(87) Internationale Veröffentlichungsnummer: WO99046491

(56) Entgegenhaltungen:
- EP-A- 0 661 432
- EP-A- 0 893 596
- WO-A-97/13063
- DE-A- 3 940 752
- DE-A- 19 546 453
- US-A- 5 078 107
- US-A- 5 709 190
- US-A- 5 724 927
- PATENT ABSTRACTS OF JAPAN vol. 16, no. 498 (M-1325), 15. Oktober 1992 (1992-10-15) & JP 04 183945 A (TOYOTA), 30. Juni 1992 (1992-06-30)

## Beschreibung

Die Erfindung bezieht sich auf ein Verfahren zum Betrieb eines Ottomotors mit Direkteinspritzung, bei dem der Motor wahlweise mit Ladungsschichtung oder homogen betrieben wird. Beim Betrieb mit Ladungsschichtung, dem sogenannten Schichtladebetrieb, erfolgt die Einspritzung des Kraftstoffs bekanntermaßen während des Kompressionshubs, vorzugsweise mit deutlichem Luftüberschuß, derart, daß der Kraftstoff geschichtet im Brennraum so vorliegt, daß das Kraftstoff/Luft-Gemisch trotz Luftüberschuß zuverlässig gezündet wird. Der Betrieb mit Ladungsschichtung ermöglicht einen geringen Kraftstoffverbrauch im Vergleich zu konventioneller äußerer Gemischbildung, insbesondere aufgrund niedrigerer Ladungswechsel- und Wandwärmeverluste. Prinzipbedingt ist der Schichtladebetrieb auf den Teillastbereich beschränkt, bei höherer Motorlast wird der direkt einspritzende Ottomotor homogen betrieben, d.h. der Kraftstoff wird in weitestgehend homogener Verteilung in den Brennraum geladen, wobei die Einspritzung während des Saughubes beispielsweise mit stöchiometrischem Kraftstoff/Luft-Verhältnis erfolgt.

Aus der Offenlegungsschrift DE 39 40 752 A1 ist ein Verfahren zum Betrieb eines Ottomotors ohne Drosselklappe bekannt, bei dem die Öffnungsdauern der Einlaßventile, über welche ein im Saugrohr bereitetes Kraftstoff/Luft-Gemisch in den jeweiligen Brennraum eingeleitet wird, ebenso wie die Kraftstoffmengen abhängig von der Motordrehzahl und der Fahrpedalstellung variabel eingestellt werden. Dadurch sollen in allen Fahrzuständen, auch bei plötzlichen Änderungen der Fahrpedalstellung, die Massen von Luft und Kraftstoff dauernd optimal aneinander angepaßt werden, um hohen Fahrkomfort ohne Zündaussetzer bei geringem Kraftstoffverbrauch und Schadstoffausstoß zu erzielen. Bei Bedarf wird durch diese variable Steuerung der Einlaßventil-Öffnungsdauern auch eine interne Abgasrückführung realisiert, indem das jeweilige Einlaßventil so angesteuert wird, daß es bereits öffnet, solange der zugehörige Zylinderkolben noch Abgas aus dem betreffenden Brennraum herausschiebt. Des weiteren kann vorgesehen sein, für jeden Brennraum zwei Einlaßkanäle vorzusehen, nämlich einen Drallkanal und einen Füllungskanal, denen jeweils ein eigenes ansteuerbares Einlaßventil zugeordnet ist. Über den Drallkanal einströmende Luft wird stark verwirbelt, was zu einer guten Gemischaufbereitung führt, während die durch den Füllungskanal strömende Luft mit möglichst geringem Widerstand und damit kleiner Verwirbelung in den Brennraum eintritt. Im unteren Lastbereich werden dann die Füllungskanal-Einlaßventile dauernd geschlossen gehalten. In einem höheren Lastbereich wird über die Drallkanal-Einlaßventile die maximal mögliche Luftmenge eingeströmt. Je nach Luftmengenbedarf bleiben einzelne Zylnder ganz abgeschaltet, oder die restliche Luftmasse wird über die Füllungskanal-Einlaßventile angesaugt.

In der deutschen Patentanmeldung 197 12 356.2 ist ein Verfahren zum Vermindern von schädlichen Abgasemissionen eines mit magerem Kraftstoff/Luft-Gemisch betriebenen Ottomotors mit Direkteinspritzung beschrieben, bei dem zwecks Regeneration eines Stickoxid-Adsorberkatalysators zwischen Schichtladebetrieb und homogenem Betrieb gewechselt wird. Im Teillastbereich wird der Motor normalerweise im Schichtladebetrieb mager betrieben. Sobald eine Regeneration des Adsorberkatalysators erforderlich ist, während der die von ihm adsorbierten Stickoxide freigesetzt und reduziert werden, wird auf homogenen Motorbetrieb dergestalt umgeschaltet, daß in einem ersten Schritt die Luftmenge im Brennraum durch Änderungen in den Ventilsteuerzeiten oder durch Drosseleinrichtungen in einem zugehörigen Ansaugkanal reduziert wird und in einem zweiten Schritt ein Übergang vom Schichtladebetrieb zum homogenen Betrieb mit fettem Kraftstoff/Luft-Gemisch erfolgt. Die Reduzierung der Luftmenge kann insbesondere durch ein verspätetes Schließen der Einlaßventile nach dem unteren Totpunkt oder durch ein vorzeitiges Schließen derselben nach dem oberen Totpunkt des Brennraumkolbens durchgeführt werden.

Der Erfindung liegt als technisches Problem die Bereitstellung eines optimierten Verfahrens zum Betrieb eines Ottomotors mit Direkteinspritzung zugrunde.

Dieses Problem wird durch ein Verfahren mit den Merkmalen des Anspruchs 1 gelöst. Bei diesem Verfahren ist eine variable Ventilsteuerung realisiert, bei der die Einlaß- und Auslaßventile mit motorbetriebszustandsabhängig variablen Steuerzeiten in ihre Öffnungs- und Schließstellungen gesteuert werden. Dabei wird zur Bestimmung der Steuerzeiten von Basis-Steuerzeiten ausgegangen, die umschaltbar durch je ein Basis-Steuerzeitenkennfeld für den Betrieb mit Ladungsschichtung einerseits und den homogenen Betrieb andererseits vorgegeben werden, um den Motor mittels dieser variablen Ventilsteuerung wahlweise mit Ladungsschichtung oder homogen zu betreiben. Zusätzlich sind die durch diese beiden Kennfelder vorgegebenen Basis-Steuerzeiten durch Korrektur-Steuerzeiten veränderbar, um damit im Rahmen der variablen Ventilsteuerung eine Abgastemperaturanhebung und/oder eine interne Abgasrückführung und/oder eine Ladungsbewegung zu bewirken. Die Abgastemperaturanhebung ist insbesondere für den Fall eines nachgeschalteten Abgaskatalysators sinnvoll, da diese meist, wie beispielsweise Stickoxid-Adsorberkatalysatoren, erst bei einer gewissen erhöhten Abgastemperatur ein zufriedenstellendes Konversionsverhalten zeigen. Durch die spezielle Abgastemperaturanhebungsmaßnahme läßt sich verhindern, daß bei sehr niedriger Motorlast und Schichtladebetrieb dieser für den Katalysator günstige Abgastemperaturbereich unterschritten wird.

In einer Weiterbildung der Erfindung nach Anspruch 2 sind zwei spezielle vorteilhafte Maßnahmen zur Abgastemperaturanhebung über die Wahl entsprechender Korrektur-Steuerzeiten vorgesehen.

Dies ermöglicht eine Abgastemperaturanhebung durch Luftmengenverringerung ohne wesentliche Drosselverluste und ohne wesentlichen Anstieg des Kraftstoffverbrauchs.

Eine Weiterbildung der Erfindung nach Anspruch 3 ermöglicht eine interne Abgasrückführung, indem die Einlaßventile frühzeitig schon während der Abgasausschiebephase eines jeweiligen Arbeitsspiels geöffnet werden.

Eine Weiterbildung der Erfindung nach Anspruch 4, die sich für einen Ottomotor mit wenigstens zwei Einlaßventilen für einen jeweiligen Brennraum eignet, ermöglicht die Erzeugung einer Ladungsbewegung durch geeignet unterschiedliche Ansteuerung der beiden Einlaßventile.

Vorteilhafte Ausführungsformen der Erfindung sind in den Zeichnungen veranschaulicht und werden nachfolgend beschrieben. Hierbei zeigen:
- Fig. 1: eine schematische Darstellung eines Ottomotors mit Direkteinspritzung, variabler Ventilsteuerung und Stickoxid-Adsorberkatalysator,
- Fig. 2: eine schematische Flußdiagrammdarstellung der von einem Motorsteuergerät in Fig. 1 durchgeführten Bestimmung der variablen Ventilsteuerzeiten und
- Fig. 3: Zeitverlaufsdiagramme verschiedener motorspezifischer Größen zur Veranschaulichung eines Betriebsartwechsels von Schichtladebetrieb zu homogenem Betrieb bei einem Ottomotor unter Verwendung der variablen Ventilsteuerung.

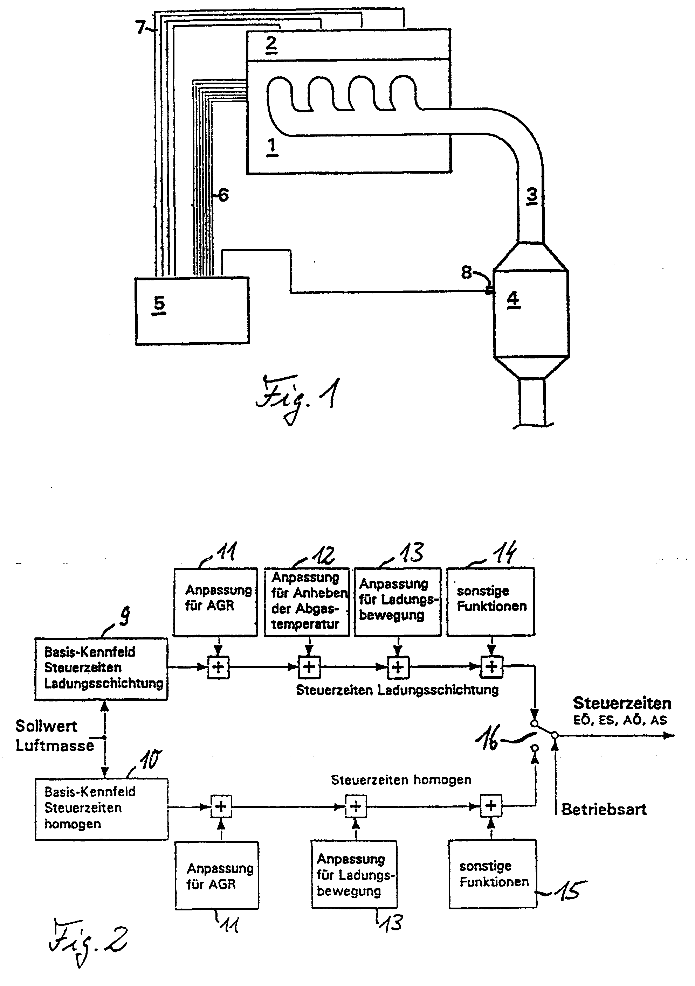

Fig. 1 zeigt schematisch im Blockdiagramm einen Ottomotor, wie er insbesondere für ein Kraftfahrzeug geeignet ist. Der gezeigte Ottomotor beinhaltet den eigentlichen Motorblock 1, eine Ventiltriebanordnung 2 mit variabel ansteuerbaren Einlaß- und Auslaßventilen für die betreffenden Motorzylinder, einen vom Motorblock 1 abführenden Abgasstrang 3, in welchem ein Stickoxid-Adsorberkatalysator 4 angeordnet ist, und ein Motorsteuergerät 5 zur Steuerung der verschiedenen Motorfunktionen. Dazu führt ein erster Kabelbaum 6 vom Motorsteuergerät 5 zum Motorblock 1 und ein zweiter Kabelbaum 7 vom Motorsteuergerät 5 zur Ventiltriebanordnung 2 zwecks variabler Ansteuerung der Einlaß- und Auslaßventile. Dem Katalysator 4 ist ein Temperatursensor 8 mit elektrischem Anschluß zugeordnet, über den das Motorsteuergerät 5 die dortige Abgastemperatur erfaßt.

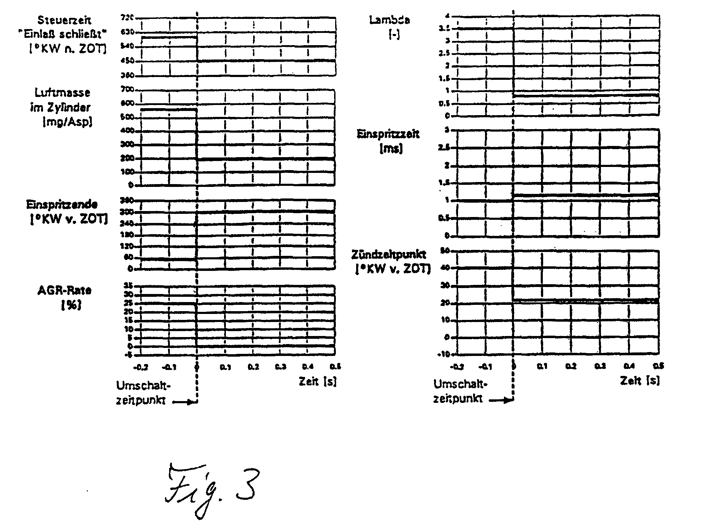

Im Motorsteuergerät 5 erfolgt die Bestimmung der Sollwerte für die Steuerzeiten der verschiedenen Einlaß- und Auslaßventile des Ventiltriebs 2 in Abhängigkeit vom jeweiligen momentanen Motorbetriebszustand und der gewünschten Motorfunktionalität gemäß dem in Fig. 2 dargestellten Schema. Dazu sind im Motorsteuergerät 5 ein erstes Basis-Steuerzeitenkennfeld 9 für den Motorbetrieb mit Ladungsschichtung und ein zweites Basis-steuerzeitenkennfeld 10 für den homogenen Motorbetrieb abgelegt. Je nachdem, ob der Motor momentan im Schichtladebetrieb oder im homogenen Betrieb gefahren werden soll, werden Basis-Steuerzeiten für die betreffende Motorbetriebsart aus dem entsprechenden Basis-Steuerzeitenkennfeld 9, 10 in Abhängigkeit vom Luftmassensollwert ermittelt. Diese Basis-Steuerzeiten werden je nach Motorbetriebsart und gewünschten Motorfunktionalitäten durch hinzugefügte Korrektur-Steuerzeiten verändert, um die für die momentane Situation jeweils gewünschten Steuerzeiten-Sollwerte bezüglich der Einspritzventil-öffnungszeitpunkte (EÖ), der Einspritzventil-Schließzeitpunkte (ES), der Auslaßventil-Öffnungszeitpunkte (AÖ) und der Auslaßventil-Schließzeitpunkte (AS) zu gewinnen.

Wie aus Fig. 2 ersichtlich, sind für den Fall des Schichtladebetriebs als Korrektur-Steuerzeiten insbesondere ein Korrektur-Steuerzeitenbeitrag 11 zur Bewirkung einer internen Abgasrückführung, ein Korrektur-Steuerzeitenbeitrag 12 zur Abgastemperaturanhebung und ein Korrektur-Steuerzeitenbeitrag 13 zur Erzeugung einer Ladungsbewegung vorgesehen. Im homogenen Betrieb sind der Korrektur-Steuerzeitenbeitrag 11 zur Bewirkung einer internen Abgasrückführung und der Korrektur-Steuerzeitenbeitrag zur Erzeugung einer Ladungsbewegung 13 vorgesehen. Sowohl im Schichtladebetrieb wie auch im homogenen Betrieb können zusätzlich je nach Anwendungsfall weitere Korrektur-Steuerzeitenbeiträge 14, 15 vorgesehen sein. Je nach gewünschter Betriebssituation wird keiner, einer oder mehrere der genannten Korrektur-Steuerzeitenbeiträge mit den aus dem jeweiligen Kennfeld 9, 10 ermittelten Basis-Steuerzeiten zur Gewinnung der passenden Ventilsteuerzeiten-Sollwerte (EÖ, ES, AÖ, AS) verknüpft, z.B. additiv. Das Motorsteuergerät 5 steuert dann die verschiedenen Einlaß- und Auslaßventile des Ventiltriebs 2 anhand der ermittelten Ventilsteuerzeiten-Sollwerte (EÖ, ES, AÖ, AS) an, wobei es je nach der gewünschten Betriebsart zwischen der Steuerzeitermittlung für Schichtladebetrieb und der Steuerzeitermittlung für homogenen Betrieb umschaltet, wie in Fig. 5 mit einer Schaltfunktionalität 16 angedeutet. Nachfolgend wird auf verschiedene, mit dem Ottomotor gemäß Figuren 1 und 2 realisierbare Betriebsvarianten näher eingegangen.

Wenn der Ottomotor mehrere Einlaßventile für einen jeweiligen Brennraum besitzt, kann durch die variable Ventilsteuerung eine Ladungsbewegung im gesamten Motorbetriebsbereich realisiert werden. Insbesondere für das Verbrennungskonzept der Ladungsschichtung ist eine intensive, speziell abgestimmte Ladungsbewegung zweckmäßig und häufig auch notwendig. Die variable Ventilsteuerung ermöglicht die Erzeugung einer Ladungsbewegung, d.h. eine Drallerzeugung für den in den Brennraum eingelassenen Luftstrom, dadurch, daß durch Verwenden des entsprechenden Korrektur-Steuerzeitenbeitrags 13 unterschiedliche Steuerzeiten für die zwei oder mehr Einlaßventile des jeweiligen Brennraums eingestellt werden, so daß sich für den Gesamtluftstrom im Brennraum eine Drallbewegung ergibt. Auf diese Weise ist zudem eine Abstimmung der Ladungsbewegung im gesamten Betriebsbereich des Motors realisierbar, wodurch der Brennvorgang stabilisiert werden und bei Bedarf eine Ausweitung des Kennfeldbereichs für den Schichtladebetrieb erfolgen kann.

Die Erzeugung der variablen Ladungsbewegung mittels der variablen Ventilsteuerung ist auch bei homogenem Motorbetrieb vorteilhaft. Denn mindestens in Teilen des Betriebskennfeldes kann die Verbrennung durch entsprechende Ladungsbewegung beschleunigt werden, was zu einer thermodynamisch günstigeren Umsetzung führt. Außerdem kann durch entsprechende Ladungsbewegung die Laufgrenze für homogenen Magerbetrieb zu höherem Luftüberschuß hin verschoben werden. Dies ermöglicht eine Reduzierung des Kraftstoffverbrauchs und der Stickoxid-Rohemissionen gegenüber stöchiometrischem Betrieb. Homogener Magerbetrieb kann in gewissen Kennfeldbereichen eine alternative Betriebsart zum Schichtladebetrieb sein, z.B. bei niedrigsten Motorlasten zur Erzielung einer höheren Abgastemperatur bei dennoch relativ günstigem Kraftstoffverbrauch oder bei höheren Drehzahlen und Motorlasten.

Eine weitere, durch die variable Ventilsteuerung realisierbare Betriebsvariante besteht in der Erzielung einer internen Abgasrückführung. Die Maßnahme der Abgasrückführung ist beim Ottomotor mit Direkteinspritzung zweckmäßig, um die Stickoxid-Rohemission möglichst niedrig zu halten. Die innere Abgasrückführung hat gegenüber einer externen Abgasrückführung den Vorteil, daß keine Androsselung beispielsweise durch eine Drosselklappe erforderlich ist, wodurch eine erhöhte Ladungswechselarbeit und ein damit verbundener erhöhter Kraftstoffverbrauch vermieden werden. Die interne Abgasrückführung wird durch eine geeignete Wahl der Steuerzeiten der Einlaß- und Auslaßventile realisiert, insbesondere dadurch, daß die Einlaßventile schon während der Abgasausschiebephase eines jeweiligen Arbeitsspiels geöffnet werden, während der das Abgas vom Kolben aus dem Brennraum herausgeschoben wird. Bei einer Motordrehzahl von 3000 U/min und einem effektiven Mitteldruck von 3 bar sind beispielsweise folgende Steuerzeitensollwerte zur Erzielung eines Restgasanteils von ca. 20% geeignet. Der Öffnungszeitpunkt für die Auslaßventile wird zwischen 80° Kurbelwellenwinkel (KW) und 40°KW vor dem unteren Totpunkt (UT) gewählt, der Schließzeitpunkt für die Auslaßventile zwischen 0°KW und 150°KW nach dem oberen Totpunkt (OT). Der Öffnungszeitpunkt für die Einlaßventile liegt im Bereich zwischen -20°KW nach dem OT und 130°KW nach dem OT, und der Schließzeitpunkt für die Einlaßventile liegt zwischen 10°KW nach dem UT und 50°KW nach dem UT. Die gewünschten Steuerzeitensollwerte werden aus den kennfeldbasierten Basis-Steuerzeiten durch Anwendung des betreffenden Korrektur-Steuerzeitenbeitrags 11 erhalten.

Die vorliegende Ottomotor-Laststeuerung mittels variabler Ventilsteuerung ermöglicht als weitere Betriebsvariante eine Anhebung der Abgastemperatur in einem niedrigen Motorlastbereich, insbesondere bei niedrigster Motorlast. In diesem Lastbereich wird der direkt einspritzende Ottomotor üblicherweise im Schichtladebetrieb mit sehr hohem Luftüberschuß betrieben, woraus Abgastemperaturen resultieren, die um ca. 200°C bis 300°C niedriger als bei stöchiometrischem Betrieb sind. Dadurch kann die Abgastemperatur im Leerlauf auf beispielsweise unter 150°c sinken. Dies ist häufig unerwünscht. So muß z.B. für eine wirksame Abgasnachbehandlung mittels eines entsprechenden Abgaskatalysators der Temperaturbereich eingehalten werden, in welchem der Katalysator konversionsaktiv ist. Heutige Stickoxid-Adsorberkatalysatoren zeigen aber meist erst bei Abgastemperaturen von mindestens 200°C ein zufriedenstellendes Konversionsverhalten. Bei konventioneller Laststeuerung kann die Abgastemperatur durch Androsselung mittels einer Drosselklappe angehoben werden, was jedoch wegen des sich verringernden Luftüberschusses die Ladungswechselarbeit und Wandwärmeverluste und damit den Kraftstoffverbrauch erhöht. Durch die vorliegende variable Ventilsteuerung läßt sich die gewünschte Liefergradverringerung der Luftmenge ohne wesentliche Drosselverluste dadurch erzielen, daß die Einlaßventile vergleichsweise früh, d.h. früher als im Bereich höherer Motorlast, geschlossen werden. Dies erlaubt eine Anhebung der Abgastemperatur ohne gleichzeitigen Anstieg des Kraftstoffverbrauchs. Die hierfür erforderlichen Steuerzeitensollwerte werden ausgehend von den Basis-Steuerzeiten anhand des zugehörigen, nur für den Schichtladebetrieb vorgesehenen Korrektur-Steuerzeitenbeitrags 12 eingestellt. Bei einer Motordrehzahl von 2000 U/min und einem effektiven Mitteldruck von 2 bar sind beispielsweise folgende Einlaßventil-Steuerzeiten zur Abgastemperaturanhebung geeignet. Bei einem Einlaßventil-Öffnungszeitpunkt zwischen 20°KW und 60°KW vor dem OT führt ein frühes Schließen der Einlaßventile zwischen 10°KW und 50°KW nach dem UT zu einer Abgastemperatur in der Größenordnung von 200°C, und ein noch früheres Schließen der Einlaßventile zwischen 10°KW und 50°KW vor dem UT kann zu einer Abgastemperatur in der Größenordnung von ca. 250°C führen.

Alternativ zu diesem frühen Schließen der Einlaßventile während jedes Arbeitsspiels kann ein Rücksaugen des sauerstoffhaltigen Abgases für das nächste Arbeitsspiel dadurch bewirkt werden, daß die Einlaßventile für einen oder mehrere Zyklen geschlossen bleiben. Auch hierdurch ist eine deutliche Anhebung der Abgastemperatur erreichbar.

Die variable Ventilsteuerung kommt zudem bei Betriebsartwechseln zwischen dem ungedrosselten Betrieb mit Ladungsschichtung und magerem Kraftstoff/Luft-Gemisch und homogenem Betrieb mit fettem oder stöchiometrischem Kraftstoff/Luft-Gemisch zum Einsatz. Ein solcher Betriebsartwechsel ist beim Übergang von einem niedrigeren Motorlastbereich zu einem höheren Motorlastbereich und umgekehrt erforderlich. Außerdem wird ein solcher Betriebsartwechsel beim Einsatz eines Stickoxid-Adsorberkatalysators zwecks Wechsel zwischen Adsorptionsbetrieb und Desorptionsbetrieb des Katalysators benutzt. Wenn der Katalysator mit adsorbierten Stickoxiden gesättigt ist, wird er vom Adsorptionsbetrieb auf den Desorptionsbetrieb umgeschaltet, in welchem die adsorbierten Stickoxide desorbiert und reduziert werden, so daß der Katalysator regeneriert wird. Für diese Regeneration ist ein möglichst sprungartiger Wechsel vom Magerbetrieb mit Ladungsschichtung zu fettem Betrieb mit Werten des Luft/Kraftstoff-Verhältnisses Lambda kleiner als eins erforderlich. Mit dem Betriebsartwechsel werden die Sollwerte für Zylinderfüllung, Einspritzzeitpunkt, Abgasrückführrate und Luft/Kraftstoff-Verhältnis geändert. Figur 3 veranschaulicht einen Betriebsartwechsel mit Einsatz der variablen Ventilsteuerung. Gezeigt sind zeitsynchrone Diagramme des zeitlichen Verlaufs von für den Betriebsartwechsel von Schichtladebetrieb zu homogenem Betrieb charakteristischen, motorspezifischen Größen.

Beim Betriebsartwechsel mit konventioneller Drosselklappensteuerung erfolgt die Abnahme der Zylinderfüllung nach Schließen der Drosselklappe wegen der Saugrohrdynamik vergleichsweise langsam über etliche Arbeitsspiele hinweg. Um den gewünschten Lambda-Verlauf bei konstantem Motordrehmoment zu erzielen, sind Übergangsfunktionen für Einspritzzeit und Zündzeitpunkt erforderlich. Wenn zudem eine externe Abgasrückführung vorgesehen ist, sind die erzielten Abgasrückführraten vom Saugrohrdruck abhängig.

Im Gegensatz dazu zeigt Fig. 3, daß durch Einsatz der variablen Ventilsteuerung ein vergleichsweise schlagartiger Betriebsartwechsel vom Schichtladebetrieb auf den homogenen Betrieb von einem Arbeitsspiel zum nächsten erzielt wird. Die vertikale Linie markiert hier den Zeitpunkt des Schließens der Einlaßventile, siehe oberstes Diagramm links. Instantan sinkt dadurch die Luftmasse im Brennraum unverzögert auf den gewünschten Wert von einem zum nächsten Arbeitsspiel ab, siehe das zweitoberste Diagramm links. Mit dem Schließen der Einlaßventile fallen zeitlich auch die Änderungen des Einspritzendes, des Lambdawertes, der Einspritzzeit und des Zündzeitpunktes zusammen, siehe zweitunterstes Diagramm links und die Diagramme rechts. Durch die variable Ventilsteuerung für die Ein- und Auslaßventile kann zudem die Rückführrate im Fall einer inneren Abgasrückführung von einem zum nächsten Arbeitsspiel schlagartig verändert werden. So veranschaulicht das Diagramm unten links die Zurücknahme der Abgasrückführrate von 25% auf 0% beim Wechsel vom Schichtladebetrieb zum homogenen Betrieb. Die interne Abgasrückführung kann somit problemlos in den Betriebsartwechsel integriert werden.

Die obige Beschreibung eines vorteilhaften Ausführungsbeispiels zeigt, daß mit der vorliegend eingesetzten variablen Steuerung der Ein- und Auslaßventile ein funktionell optimaler Betrieb eines Ottomotors mit Direkteinspritzung erzielbar ist, der insbesondere beim Einsatz in Kraftfahrzeugen einen hohen Fahrkomfort erlaubt. Neben den oben genannten Funktionalitäten ist durch das vorliegende Verfahren mittels der Kombination von Direkteinspritzung und variabler Ventilsteuerung zudem eine Anhebung des maximalen Mitteldrucks in an sich bekannter Weise möglich, indem durch Anpassung der Ventilsteuerzeiten an die Motordrehzahl bei Vollast eine Liefergradverbesserung im Vergleich zur herkömmlichen Saugrohreinspritzung erzielt werden kann.

## Patentansprüche

1. Verfahren zum Betrieb eines Ottomotors mit Direkteinspritzung, bei dem
- der Motor wahlweise mit Ladungsschichtung oder homogen betrieben wird,
**dadurch gekennzeichnet, daß**
- die Einlaß- und Auslaßventile (2) mit motorbetriebszustandsabhängig variablen Steuerzeiten in ihre Öffnungs- und/oder Schließstellungen gesteuert werden, wobei zur Bestimmung der Steuerzeiten von Basis-Steuerzeiten ausgegangen wird, die umschaltbar durch je ein Basis-Steuerzeitenkennfeld (9, 10) für den Betrieb mit Ladungsschichtung einerseits und den homogenen Betrieb andererseits vorgegeben werden, und wobei die Basis-Steuerzeiten durch Korrektur-Steuerzeiten (11 bis 15) zur Abgastemperaturanhebung und/oder für eine interne Abgasrückführung und/oder zur Erzeugung einer Ladungsbewegung veränderbar sind.

2. Verfahren nach Anspruch 1, weiter
**dadurch gekennzeichnet, daß**
für einen niedrigen Motorlastbereich, in welchem der Motor mit Ladungsschichtung betrieben wird, Korrektur-Steuerzeiten (12) zur Abgastemperaturanhebung derart vorgesehen sind, daß das jeweilige Einlaßventil in jedem Arbeitsspiel früher als in einem höheren Lastbereich geschlossen oder über jeweils ein oder mehrere Arbeitsspiele hinweg geschlossen gehalten wird.

3. Verfahren nach Anspruch 1 oder 2, weiter
**dadurch gekennzeichnet**, d a ß
Korrektur-Steuerzeiten (11) zur Erzielung einer internen Abgasrückführung derart vorgesehen sind, daß das jeweilige Einlaßventil bereits während der Abgasausschiebephase eines jeweiligen Arbeitsspiels geöffnet wird.

4. Verfahren nach einem der Ansprüche 1 bis 3 zum Betrieb eines Ottomotors mit wenigstens zwei Einlaßventilen für einen jeweiligen Brennraum, weiter
**dadurch gekennzeichnet, daß**
Korrektur-Steuerzeiten (13) zur Erzeugung einer Ladungsbewegung derart vorgesehen sind, daß wenigstens in bestimmten Motorbetriebszuständen die wenigstens zwei Einlaßventile zwecks Erzeugung einer Ladungsbewegung im betreffenden Brennraum zu unterschiedlichen Zeiten geöffnet und/oder geschlossen werden.

## Claims

1. A process for the operation of an SI engine with direct injection in which
- the engine is operated either with charge layering or a homogeneous charge,
**characterised in that**
- the intake and exhaust valves (2) are moved into their open and closed positions with engine-operating-status-dependent variable timing, the setting of the timing being based on a basic timing which is predetermined either by a basic timing characteristic map (9, 10) for operation with charge layering, on one hand, or homogenous operation on the other, and it being possible to modify the basic timing by means of correction timing (11 to 15) to increase the temperature of the exhaust gas and/or for internal exhaust gas recirculation and/or to generate a charge movement.

2. A process in accordance with claim 1, further
**characterised in that**
for a low engine load range in which the engine is operated with charge layering, correction valve timing (12) to increase the temperature of the exhaust gas are set in such a manner that in each working cycle the various intake valves are closed earlier than at a higher load range or are kept closed for one or more working cycles.

3. A process in accordance with claim 1 or 2, further
**characterised in that**
correction valve timing (11) to achieve internal exhaust gas recirculation is set in such a manner that the various intake valves are opened during the exhaust gas expelling phase of the working cycle.

4. A process in accordance with one of claims 1 to 3 for the operation of an SI engine with at least two intake valves for each combustion chamber,
**characterised in that**
correction valve timing (13) to generate a charge movement is set in such a manner that in certain engine operating statuses at least the at least two intake valves are opened and/or closed at different times in order to generate a charge movement in the relevant combustion chamber.

## Revendications

1. Procédé de fonctionnement d'un moteur à allumage par étincelle à injection directe, dans lequel :
- le moteur fonctionne au choix par étagement de charge ou de façon homogène,
**caractérisé en ce que** :
- les soupapes d'admission et d'échappement (2) sont commandées dans leurs positions d'ouverture et/ou de fermeture avec des temps de commande variables en fonction de l'état de fonctionnement du moteur, et pour déterminer les temps de commande, on part de temps de commande de base qui sont prédéterminés de façon inversible par un champ caractéristique respectif des temps de commande de base (9, 10) pour le fonctionnement en étagement de charge d'une part et pour le fonctionnement homogène d'autre part, et dans lequel les temps de commande de base peuvent être modifiés par des temps de commande de correction (11 à 15) pour augmenter la température des gaz d'échappement et/ou pour un retour interne des gaz d'échappement et/ou pour générer un mouvement de charge.

2. Procédé selon la revendication 1, **caractérisé en ce que** pour une faible plage de charge du moteur, dans laquelle le moteur fonctionne avec étagement de charge, on prévoit des temps de commande de correction (12) pour l'augmentation de la température des gaz d'échappement, de telle sorte que la soupape d'admission respective est fermée, lors de chaque cycle de travail, plus tôt que dans une plage de charge plus élevée, ou bien elle est maintenue fermée pendant un ou plusieurs cycles de travail.

3. Procédé selon l'une ou l'autre des revendications 1 et 2, **caractérisé en ce que** l'on prévoit des temps de commande de correction (11) pour obtenir un retour interne des gaz d'échappement, de telle sorte que la soupape d'admission respective est ouverte déjà pendant la phase de sortie des gaz d'échappement d'un cycle de travail respectif.

4. Procédé selon l'une des revendications 1 à 3 pour le fonctionnement d'un moteur à allumage par étincelle comportant au moins deux soupapes d'admission pour chaque chambre de combustion, **caractérisé en ce que** l'on prévoit des temps de commande de correction (13) pour obtenir un mouvement de charge de telle sorte qu'au moins dans des états de fonctionnement déterminés du moteur lesdites au moins deux soupapes d'admission sont ouvertes et/ou fermées à des instants différents pour obtenir un mouvement de charge dans la chambre de combustion concernée.
